Europäisches Patentamt

European Patent Office

Office européen des brevets

(11) Veröffentlichungsnummer: **0 075 848**
A2

## (12) EUROPÄISCHE PATENTANMELDUNG

(21) Anmeldenummer: **82108747.5**

(22) Anmeldetag: **22.09.82**

(51) Int. Cl.³: **B 65 G 51/38**

(30) Priorität: **29.09.81 DE 3138611**

(43) Veröffentlichungstag der Anmeldung:
**06.04.83 Patentblatt 83/14**

(84) Benannte Vertragsstaaten:
**AT BE CH FR GB IT LI LU NL SE**

(71) Anmelder: **Aerocontact GmbH & Co. KG**
**Plochinger Strasse 54**
**D-7301 Deizisau(DE)**

(72) Erfinder: **Blessing, Albert**
**Schurwaldstrasse 21**
**D-7302 Ostfildern 1(DE)**

(74) Vertreter: **Rüger, Rudolf, Dr.-Ing.**
**Webergasse 3 Postfach 348**
**D-7300 Esslingen/Neckar(DE)**

(54) Rohrschalter für Rohrpostanlagen.

(57) Ein Rohrschalter für Rohrpostanlagen weist ein auf ein Fahrrohr außen aufsetzbares Gehäuse auf, in dem ein aus dem Gehäuse einseitig vorstehendes elastisches Betätigungsglied schwenkbar gelagert ist, das bei aufgesetztem Gehäuse über eine entsprechende Wandungsöffnung in das Innere eines Fahrrohres ragt und durch eine Fahrbüchse betätigbar ist.

Um bei einfachem betriebssicherem Aufbau eine lange Lebensdauer und eine einwandfreie Signalgabe, unabhängig von dem jeweiligen Verwendungszweck des Rohrschalters zu erzielen, ist in dem Gehäuse (1) eine die jeweilige Schwenkstellung des durch Federkraft in einer unbetätigten Stellung gehaltenen Betätigungsgliedes (4) abtastende Lichtschranke (9) angeordnet, durch die bei Überführung des Betätigungsgliedes in eine betätigte Stellung ein elektrisches Signal abgebbar ist.

Fig. 1

- 1 -

Aerocontact GmbH & Co. KG., Plochinger Straße 54
D-7301 Deizisau

Rohrschalter für Rohrpostanlagen

Die Erfindung betrifft einen Rohrschalter für Rohrpostanlagen, mit einem auf ein Fahrrohr außen aufsetzbaren Gehäuse, in dem ein aus dem Gehäuse einseitig vorstehendes elastisches Betätigungsglied schwenkbar gelagert ist, das bei aufgesetztem Gehäuse über
eine entsprechende Wandungsöffnung in das Innere eines Fahrrohres ragt und durch eine Büchse betätigbar
ist.

Solche Rohrschalter sind bei Rohrpostanlagen in der
Praxis in verschiedenen Ausführungsformen bekannt.
Ihr in das Innere des Fahrrohres ragendes Betätigungsglied wird jeweils von einer Büchse betätigt, womit
ein elektrisches Signal abgegeben wird, das entsprechend der jeweiligen Bestimmung des Rohrschalters
die Ankuft, Abfahrt oder Durchfahrt einer Büchse anzeigt. Bei einer weit verbreiteten Ausführungsform
ist das Betätigungsglied mit einem Mikroschalter gekuppelt, der bei der Verschwenkung des Betätigungsgliedes betätigt wird. Derartige Mikroschalter sind
aber nicht prellfrei; auch ist ihre Lebensdauer begrenzt. Daneben ist es auch bekannt, durch das Betätigungsglied unmittelbar zugeordnete elektrische Kontakte mechanisch betätigen zu lassen. Solche mechanischen Schalter sind aber auch nicht prellfrei; auch
ist die Kontaktbetätigung und Signalabgabe bei schnell
durchfahrenden Büchsen problematisch.

Aufgabe der Erfindung ist es deshalb, einen Rohrschalter für Rohrpostanlagen zu schaffen, der sich durch einen besonders einfachen betriebssicheren Aufbau und damit eine lange Lebensdauer auszeichnet und eine einwandfreie Signalabgabe,unabhängig von seinem jeweiligen Verwendungszweck als Büchsenankunfts- oder -endschalter, als Büchsendurchfahrtsschalter od.dgl. gewährleistet.

Zur Lösung dieser Aufgabe ist der eingangs genannte Rohrschalter erfindungsgemäß dadurch gekennzeichnet, daß in dem Gehäuse eine die jeweilige Schwenkstellung des durch Federkraft in einer unbetätigten Stellung gehaltenen Betätigungsgliedes abtastende Lichtschranke angeordnet ist, durch die bei Überführung des Betätigungsgliedes in eine betätigte Stellung ein elektrisches Signal abgebbar ist.

Die Lichtschranke ist in dem Gehäuse außerhalb des eigentlichen Fahrrohres untergebracht und damit gegen Verschmutzung geschützt. Sie hat nur einen sehr kleinen Strombedarf, weil die Abtastung der Stellung des Betätigungsgliedes mit einem sehr kurzen Strahlenweg möglich ist. Außerdem braucht das Betätigungsglied bei der Signalabgabe keinerlei mechanische Betätigungskräfte auf einen Schaltmechanismus zu übertragen, was bedeutet, daß die Verschwenkung des Betätigungsgliedes durch die Büchse mit geringem Kraftaufwand erfolgt. Schließlich ist der neue Rohrschalter völlig prellfrei.

In einer bevorzugten Ausführungsform kann das Betätigungsglied zwei beidseitig der unbetätigten Stellung liegende betätigte Stellungen aufweisen, so daß der Rohrschalter wahlweise von in der einen oder in der anderen Richtung durchfahrenden Büchsen betätigt werden kann.

Besonders einfache konstruktive Verhältnisse ergeben sich, wenn das Betätigungsglied einen starr mit ihm verbundenen Steuerfinger trägt, der in der unbetätigten Stellung des Betätigungsgliedes im Strahlenweg der Lichtschranke liegt und in der betätigten Stellung des Betätigungsgliedes aus dem Strahlenweg der Lichtschranke herausgeschwenkt ist. Dabei kann der Steuerfinger im Bereiche der Schwenkachse des Betätigungsgliedes an diesem befestigt und von dem Betätigungsglied einseitig vorragend angeordnet sind. Auf diese Weise läßt sich erreichen, daß ohne besondere zusätzliche Maßnahmen die Lichtschranke bei einer Verschwenkung des Betätigungsgliedes in der einen oder anderen Richtung freigegeben wird.

Schließlich ist es vorteilhaft, wenn der Lichtschranke ein die Impulsbreite des abgegebenen Signales auf einen vorbestimmten Wert beschneidende und den Impuls gegebenenfalls formende elektronische Schaltung nachgeschaltet ist. Die Impulsbreite des Ausgangsimpulses kann damit den jeweiligen Erfordernissen entsprechend eingestellt werden. Damit kann u.a. sichergestellt werden, daß der Rohrschalter bei einer innerhalb einer bestimmten Zeitspanne erfolgenden Mehrfachbetätigung, wie sie etwa dadurch zustande kommt, daß das Betätigungsglied die unregelmäßigen Außenkonturen einer durchfahrenden Büchse abtastet, lediglich einen einzigen Ausgangsimpuls abgibt.

Der neue Rohrschalter kann in Rohrpostanlagen, wie erwähnt, als Büchsenankunfts- oder -endschalter, Büchsendurchfahrtsschalter, Weichenumsteuerschalter und ganz allgemein für Steuerungszwecke eingesetzt werden.

In der Zeichnung ist ein Ausführungsbeispiel des Gegenstandes der Erfindung dargestellt. Es zeigen jeweils in schematischer Darstellung

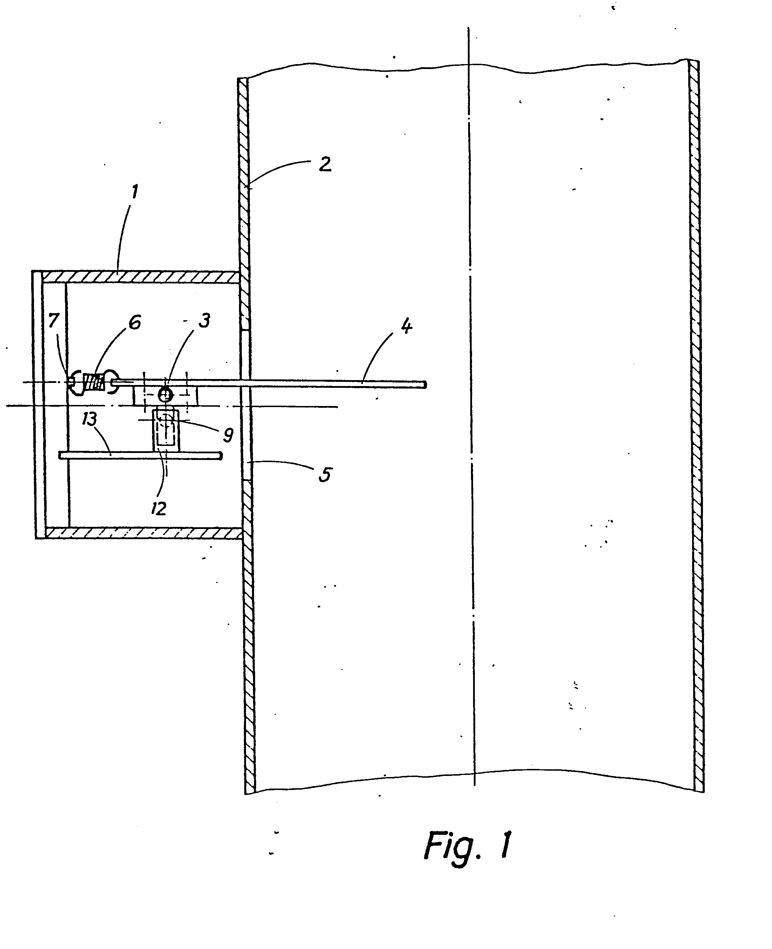

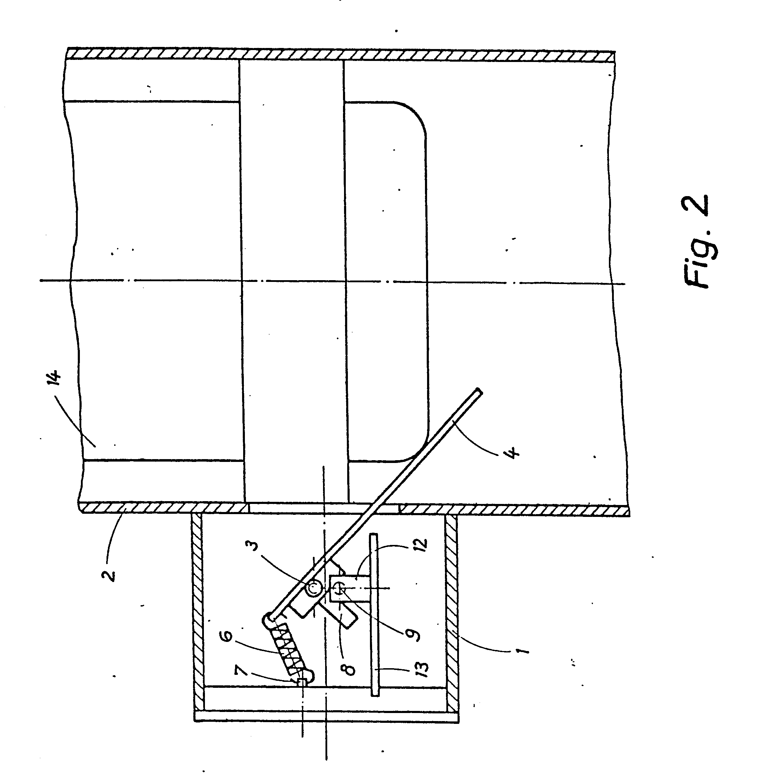

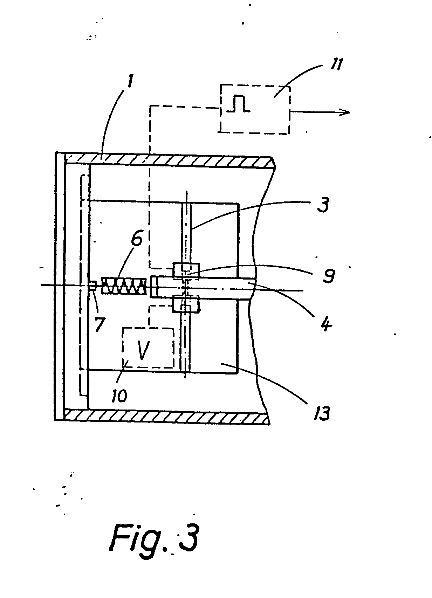

Figur 1 einen Rohrschalter gemäß der Erfindung im axialen Schnitt in einer Seitenansicht unter Veranschaulichung der unbetätigten Stellung des Betätigungsgliedes, Figur 2 den Rohrschalter nach Figur 1 in einer entsprechenden Darstellung unter Veranschaulichung des in einer betätigten Stellung stehenden Betätigungsgliedes und Figur 3 den Rohrschalter nach Figur 1 in einer Draufsicht bei aufgeschnittenem Gehäuse.

Der Rohrschalter weist ein vorzugsweise aus Kunststoffmaterial bestehendes dosenartiges Gehäuse 1 auf, das zur Befestigung an der Außenwand eines bei 2 veranschaulichten Fahrrohres einer Rohrpostanlage eingerichtet ist. In dem Gehäuse 1 ist mittels einer horizontalen Schwenkachse 3 ein leistenartiges Betätigungsglied 4 schwenkbar gelagert, das aus einem biegsamen elastischen Material besteht und aus dem Gehäuse 1 einseitig vorstehend durch eine schlitzartige Öffnung 5 in der Wandung des Fahrrohres 2 in das Fahrrohrinnere ragt. An dem in Fig. 1, 2 linken Ende des Betätigungsgliedes 4 greift eine Zugfeder 6 an, die endseitig bei 7 an der Rückwand des Gehäuses 1 verankert ist und durch die das Betätigungsglied 4 normalerweise in der in Fig. 1 dargestellten unbetätigten Horizontalstellung elastisch gehalten ist.

Im Bereiche der Schwenkachse 3 ist an dem Betätigungsglied 4 ein rechtwinklig abstehender schmaler Steuerfinger 8 befestigt, der bei in der unbetätigten Stellung nach Fig. 1 stehendem Betätigungsglied 4 im Wege einer als sog. Gabellichtschranke ausgebildeten Lichtschranke 9 liegt und diese unterbricht. Die Gabellichtschranke 9 weist eine an eine bei 10 veranschaulichte Stromquelle angeschlossene Lichtquelle und ein mit einer elektronischen Schaltung 11 verbundenes lichtempfindliches Element auf, das gemeinsam mit der Lichtquelle in einem gabelförmigen Halter 12 angeordnet ist, welcher auf einer an der Rückwand des Gehäuses 12 befestigten Konsole 13 sitzt.

Wird das Betätigungsglied 4, ausgehend von der in Fig. 1 dargestellten unbetätigten Stellung, durch eine in Fig. 2 bei 14 angedeutete, ankommende Rohrpostbüchse nach unten geschwenkt, so wird der Steuerfinger 8 aus dem Strahlenweg der Lichtschranke 9 herausbewegt, so daß diese an die elektronische Schaltung 11 ein Signal abgibt. Die elektronische Schaltung 11 beschränkt die Breite des das Signal bildenden Impulses auf einen vorbestimmten Wert, der variierbar ist und der beispielsweise zwischen ca. 10 $\mu$s und ca. s liegt. Außerdem wird in der elektronischen Schaltung 11 der Impuls in eine für die Weiterverarbeitung geeignete Form gebracht (entprellt). Durch die Festlegung der Impulsbreite wird sichergestellt, daß trotz einer innerhalb einer bestimmten Zeitspanne erfolgenden mehrfachen Betätigung des Betätigungsgliedes 4 lediglich ein einziger Ausgangsimpuls abgegeben wird. Diese Mehrfachbetätigung kann dadurch zustande kommen, daß das sich im weiteren Verlauf der Fahrbewegung der Rohrpostbüchse 14 (Fig. 2) an die Innenwand des Fahrrohres 2 anlegende biegsame Betätigungsglied 4 die unregelmäßige Gestalt der Rohrpostbüchse 14 abtastet.

In entsprechender Weise kann das Betätigungsglied 4 auch von einer - bezogen auf Fig. 2 - von unten nach oben fahrenden Rohrpostbüchse 14 betätigt und dabei nach oben geschwenkt werden. Auch in diesem Falle wird die Lichtschranke 9 von dem Steuerfinger 8 freigegeben, womit von der elektronischen Schaltung 11 ein Ausgangsimpulssignal abgegeben wird.

Patentansprüche:

1. Rohrschalter für Rohrpostanlagen, mit einem auf ein Fahrrohr außen aufsetzbaren Gehäuse, in dem ein aus dem Gehäuse einseitig vorstehendes elastisches Betätigungsglied schwenkbar gelagert ist, das bei aufgesetztem Gehäuse über eine entsprechende Wandungsöffnung in das Innere eines Fahrrohres ragt und durch eine Büchse betätigbar ist, dadurch gekennzeichnet, daß in dem Gehäuse (1) eine die jeweilige Schwenkstellung des durch Federkraft in einer unbetätigten Stellung gehaltenen Betätigungsgliedes (4) abtastende Lichtschranke (9) angeordnet ist, durch die bei Überführung des Betätigungsgliedes (4) in eine betätigte Stellung ein elektrisches Signal abgebbar ist.

2. Rohrschalter nach Anspruch 1, dadurch gekennzeichnet, daß das Betätigungsglied (4) zwei beidseitig der unbetätigten Stellung liegende betätigte Stellungen aufweist.

3. Rohrschalter nach einem der vorhergehenden Ansprüche, dadurch gekennzeichnet, daß das Betätigungsglied (4) einen starr mit ihm verbundenen Steuerfinger (8) trägt, der in der unbetätigten Stellung des Betätigungsgliedes (4) im Strahlenweg der Lichtschranke (9) liegt und in der betätigten Stellung des Betätigungsgliedes (4) aus dem Strahlenweg der Lichtschranke (9) herausgeschwenkt ist.

4. Rohrschalter nach Anspruch 3, dadurch gekennzeichnet, daß der Steuerfinger (8) im Bereiche der Schwenkachse (3) des Betätigungsgliedes (4) an diesem befestigt ist und daß der Steuerfinger (8) von dem Betätigungsglied (4) einseitig vorragend angeordnet ist.

5. Rohrschalter nach einem der vorhergehenden Ansprüche, dadurch gekennzeichnet, daß der Lichtschranke (9) ein die Impulsbreite des abgegebenen Signales auf einen vorbestimmten Wert beschneidende und den Impuls gegebenenfalls formende elektronische Schaltung (11) nachgeschaltet ist.

0075848

*Fig. 1*

Fig. 2

Fig. 3